Europäisches Patentamt

European Patent Office

Office européen des brevets

(19)

(11) Numéro de publication : **0 506 586 A1**

## (12) DEMANDE DE BREVET EUROPEEN

(21) Numéro de dépôt : **92420083.5**

(22) Date de dépôt : **20.03.92**

(51) Int. Cl.⁵ : **F16L 37/08**

(30) Priorité : **22.03.91 FR 9103927**

(43) Date de publication de la demande :
**30.09.92 Bulletin 92/40**

(84) Etats contractants désignés :
**AT BE CH DE DK ES GB GR IT LI LU NL PT SE**

(71) Demandeur : **PARKER HANNIFIN RAK S.A.**
**Zone Industrielle du Mont-Blanc Ville la Grand**
**F-74100 Annemasse (FR)**
(72) Inventeur : **Badoureaux, Jean-Pierre**
**F-74250 Fillinges (FR)**

(74) Mandataire : **Maureau, Philippe et al**
**Cabinet GERMAIN & MAUREAU BP 3011**
**F-69392 Lyon Cédex 03 (FR)**

(54) **Raccord à griffes perfectionné.**

(57)  Ce raccord est du type dont le corps présente un alésage traversant et, à l'une de ses extrémités, des moyens de connexion à l'un des deux organes à relier à l'aide desdits tubes tandis qu'à son autre extrémité, il présente une chambre annulaire coaxiale à l'alésage destinée à recevoir l'une des extrémités d'un tube par simple engagement, la chambre logeant différents organes annulaires pour la retenue du tube, coaxiaux à elle-même et disposés entre sa paroi et le tube, à savoir, une bague de retenue fermant partiellement la chambre et pouvant coulisser en elle, un joint d'étanchéité et une pièce présentant des griffes radiales.

   Selon l'invention, le raccord est constitué, d'une part, par un corps (4) présentant ledit alésage traversant (10) et lesdits moyens de connexion (11,12) et, d'autre part, par une douille (5) pouvant être assemblée au corps (4), délimitant ladite chambre (20) et comprenant des moyens (30 à 33) pour retenir les différents organes (21,22,23) précités qu'elle loge.

FIG.2

La présente invention concerne un raccord à griffes perfectionné.

La Demanderesse est titulaire du brevet français N° 85 10598 déposé le 2 juillet 1985, qui concerne un raccord à griffes pour tubes souples souples ou tubes rigides éventuellement munis d'une gorge annulaire externe. Ce raccord possède un corps présentant un alésage traversant et, à l'une de ses extrémités, un embout fileté mâle ou femelle pour sa liaison amovible à l'un des deux organes à relier à l'aide desdits tubes, son autre extrémité présentant une chambre annulaire coaxiale audit alésage destinée à recevoir et à retenir l'une des extrémités d'un tube souple par simple engagement. Pour ce faire, la chambre loge divers organes annulaires, coaxiaux à elle-même et disposés entre sa paroi et le tube, à savoir, successivement et à partir de son ouverture :

– une bague de retenue, fermant partiellement la chambre, de laquelle elle dépasse, et pouvant coulisser en elle ;

– un joint d'étanchéité en appui contre la bague ;

– une pièce en appui contre le joint, de soutien d'

– une autre pièce présentant des griffes inclinées vers le fond de la chambre et faisant saillie radialement vers l'intérieur de celle-ci ;

– un jonc situé entre ladite pièce de soutien et ladite pièce à griffes, permettant le maintien de cette dernière entre lui et un épaulement ménagé dans la paroi interne de la chambre, et

– un joint d'étanchéité placé contre le bord de la chambre.

L'inclinaison des griffes leur permet de faciliter l'engagement du tube et de s'opposer à son désengagement puisqu'un mouvement de recul du tube provoque un basculement des griffes et leur pénétration dans la paroi du tube.

Pour retirer le tube du raccord, il convient d'appuyer sur la bague de retenue pour la déplacer en direction du fond de la chambre, ce qui provoque le déplacement du joint et de la pièce de soutien, cette dernière comprenant des languettes orientées en direction desdites griffes, sur lesquelles elles viennent appuyer au cours de ce déplacement de manière à les faire s'effacer par rapport à la paroi du tube, c'est-à-dire en provoquant leur basculement dans le sens inverse de celui par lequel elles peuvent pénétrer dans la paroi du tube.

Les raccords selon ce brevet donnent en pratique toute satisfaction mais présentent toutefois les inconvénients d'obliger le fabricant à réaliser et à stocker d'importantes quantités de raccords de ce type, qui diffèrent les uns des autres par leurs moyens de connexion situés du côté du corps opposé à la chambre (embouts filetés, embouts dits "à barbe", "à bulbe" ou embouts comportant un raccord à griffes identique), et d'être complexes de fabrication puisque, y compris leur corps, ils ne comprennent chacun pas moins de sept éléments constitutifs. En outre, dans les raccords existants, la bague dépasse du corps, comme déjà dit, ce qui rend possible son actionnement involontaire.

La présente invention vise à remédier à l'ensemble de ces inconvénients.

A cette fin, le raccord à griffes pour tubes souples ou tubes rigides éventuellement munis d'une gorge annulaire qu'elle concerne, du type dont le corps présente un alésage traversant et, à l'une de ses extrémités, des moyens de connexion à l'un des deux organes à relier à l'aide desdits tubes tandis qu'à son autre extrémité, il présente une chambre annulaire coaxiale à l'alésage destinée à recevoir l'une des extrémités d'un tube par simple engagement, la chambre logeant différents organes annulaires pour la retenue du tube, coaxiaux à elle-même et disposés entre sa paroi et le tube, à savoir, une bague de retenue formant partiellement la chambre et pouvant coulisser en elle, un joint d'étanchéité et une pièce présentant des griffes radiales est caractérisé en ce qu'il est constitué, d'une part, par un corps présentant ledit alésage traversant et lesdits moyens de connexion et, d'autre part, par une douille pouvant être assemblée au corps, délimitant ladite chambre et comprenant des moyens pour retenir les différents organes précités qu'elle loge.

Ainsi, pour constituer des raccords, il est possible de fabriquer séparément des douilles standard et des corps présentant, à une extrémité, un profil permettant leur assemblage avec les douilles et, à l'autre extrémité, différents moyens de connexion tels que ceux précités, puis d'assembler ensuite les douilles et les corps en fonction de la demande. La fabrication et le montage de ces raccords en sont grandement simplifiés et les stocks nécessaires pour répondre à la demande sont bien moindres, l'assemblage se faisant au dernier moment et en fonction des besoins.

De préférence, les moyens pour retenir les organes logés dans la chambre sont constitués, du côté de la bague, par un épaulement et, du côté de la pièce à griffes, par des têtons faisant saillie de la face de la douille délimitant la chambre, radialement et vers l'intérieur, au-delà desquels peut être engagée ladite pièce à griffes grâce à son élasticité relative.

Selon une forme de réalisation préférée de l'invention, la bague présente, du côté de la pièce à griffes et faisant une seule pièce avec elle, un prolongement tubulaire qui lui est coaxial, dont la paroi a une épaisseur nettement inférieure à celle de sa paroi et qui fait saillie de sa face annulaire d'extrémité, ce prolongement étant divisé en deux parties, dont une première, située du côté de la bague, qui est raccordée à la bague sensiblement à équidistance des bords délimitant ladite face annulaire d'extrémité et qui comprend des lumières ménagées sur sa périphérie, et dont une deuxième, située du côté des griffes de ladite pièce à griffes, qui a un diamètre interne non inférieur au diamètre externe du tube et qui est apte, lorsqu'elle est déplacée en direction des griffes, à venir appuyer contre ces dernières de manière à provoquer leur basculement dans le sens de leur effacement par rapport à la paroi du tube, un joint d'étanchéité étant surmoulé autour de ladite première partie du prolongement.

Bien entendu, la position de la paroi de ladite première partie du prolongement sur la face annulaire de la bague et les lumières qu'elle comprend permettent la solidarisation du joint surmoulé à la bague et ladite deuxième partie constitue une pièce de soutien et d'actionnement des griffes. Ainsi constitué, le raccord comprend cinq éléments, y compris le corps, alors que celui de la technique antérieure en comprend sept.

Par ailleurs, du côté opposé à la pièce à griffes, l'extrémité de la bague est en retrait de l'extrémité de la douille, ce qui empêche tout actionnement involontaire, cette extrémité de la douille ne pouvant comporter que des ouvertures réduites empêchant l'accès à la bague autrement qu'avec un outil approprié prévu à cet effet.

De toute façon, l'invention sera bien comprise à l'aide de la description qui suit, en référence au dessin schématique annexé représentant, à titre d'exemple non limitatif, une forme d'exécution préférée du raccord qu'elle concerne.

Figure 1 est une vue en coupe longitudinale de l'un de ses sous-ensembles constitutifs ;

Figures 2 et 3 sont des vues en coupe longitudinale du raccord dans deux positions de fonctionnement différentes ;

Figure 4 est une vue axiale de l'une des extrémités du raccord ; et

Figure 5 est une vue en perspective d'un instrument permettant l'actionnement du raccord.

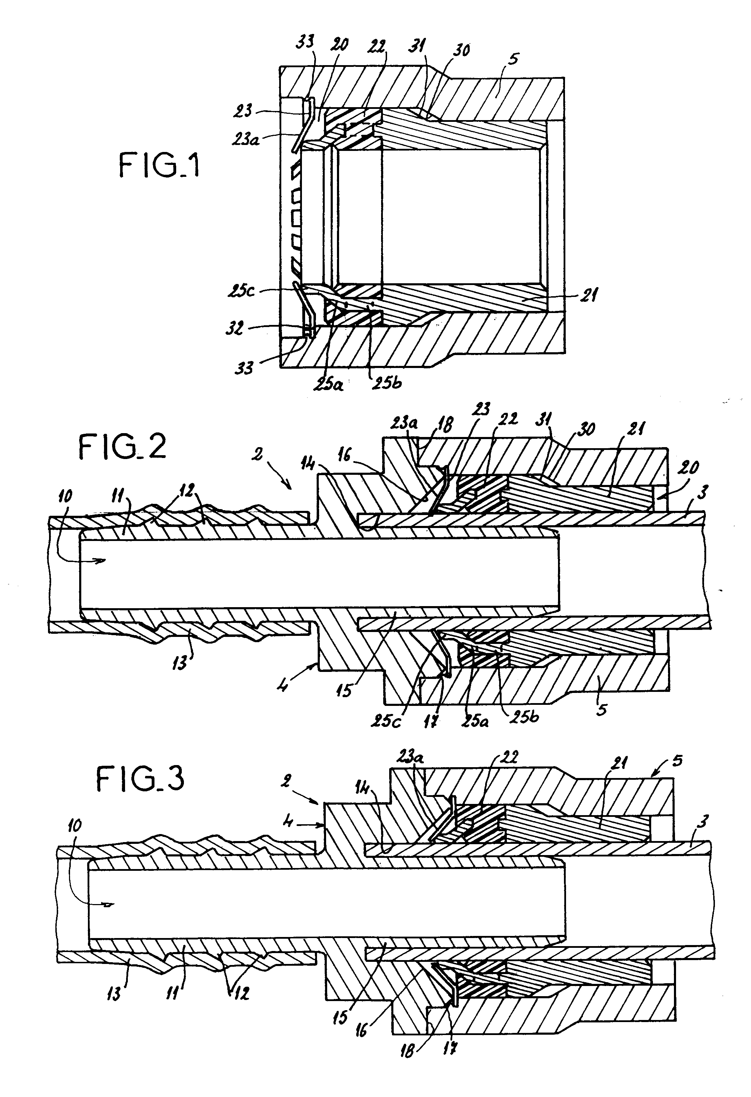

Les figures 2 et 3 représentent un raccord à griffes 2 perfectionné pour tubes souples 3 ou tubes rigides éventuellement munis d'une gorge annulaire.

Il est constitué, d'une part, par un corps 4 et, d'autre part, par une douille 5 pouvant être assemblée au corps 4 notamment par soudure.

Le corps 4 présente un alésage traversant 10 et, à l'une de ses extrémités, un embout tubulaire 11 dit "à barbe", c'est-à-dire comprenant des picots 12, pour l'emmanchement et la retenue d'un tube 13, tandis qu'à son autre extrémité, il présente un alésage 14 duquel fait saillie, coaxialement à lui-même, un embout tubulaire 15 sur lequel est destiné à être emmanché le tube 3. Sur la face d'assemblage du corps 4 à la douille 5, concentriquement à l'embout 15, l'ouverture dudit alésage 14 est usinée en une cuvette tronconique 16, un chanfrein tronconique 17 étant ménagé dans le bord de la paroi qui délimite l'ouverture de la cuvette 16, et un épaulement 18 étant prévu pour l'engagement de l'extrémité de la douille 5.

Cette dernière délimite une chambre annulaire 20, coaxiale à l'alésage 14 lorsque la douille 5 est assemblée au corps 4, logeant différents organes annulaires pour la retenue du tube 3, coaxiaux à elle-même et disposés entre sa paroi et le tube 3, à savoir une bague 21 de retenue fermant partiellement la chambre 20 et pouvant coulisser en elle, un joint d'étanchéité 22 et une rondelle 23 présentant des griffes 23a inclinées vers le fond de la chambre 20 et faisant saillie radialement vers l'intérieur de celle-ci.

La bague 21 présente, du côté de la rondelle 23 et faisant une seule pièce avec elle, un prolongement tubulaire, qui lui est coaxial et dont la paroi a une épaisseur nettement inférieure à la sienne. Le prolongement comporte une paroi conique 25a qui le divise en deux parties 25b et 25c, dont une première 25b, située du côté de la bague 21, qui est raccordée à la face annulaire d'extrémité de la bague 21 sensiblement à équidistance des bords délimitant cette face annulaire d'extrémité et qui comprend des lumières ménagées sur sa périphérie, et dont une deuxième 25c, située du côté des griffes 23a, qui a un diamètre interne non inférieur au diamètre externe du tube 3 et qui est apte, lorsqu'elle est déplacée en direction des griffes 23a, à venir appuyer contre ces dernières de manière à provoquer leur basculement dans le sens de leur effacement par rapport à la paroi du tube 3 (figure 3).

Le joint d'étanchéité 22 est surmoulé autour de la partie 25b du prolongement 25, ce surmoulage étant rendu possible grâce à la position de la partie 25b sur la face annulaire d'extrémité de la bague 21 et grâce aux lumières qu'elle comprend.

La douille 5 comprend un épaulement conique 30 contre lequel un épaulement complémentaire 31 ménagé dans la paroi de la bague peut venir en butée, ainsi qu'un épaulement 32 et une pluralité de têtons 33 entre lesquels peut venir se loger la rondelle 23.

Ainsi, après introduction de l'ensemble bague 21-joint 22-prolongement 25 dans la chambre 20 et mise en place de la rondelle 23, la douille 5 retient les différents organes qu'elle loge et constitue un ensemble standard, représenté par la figure 1, qui peut être, en fonction des demandes, assemblé au corps 4 muni d'un embout "à barbe" ou à d'autres corps munis d'embouts différents (filetés, "à bulbes" ou comportant une douille 5 disposée symétriquement), le chanfrein 17 du corps 4 permettant de ménager l'espace dans lequel peuvent se loger les têtons 33 et la cuvette 16 logeant les griffes 23a.

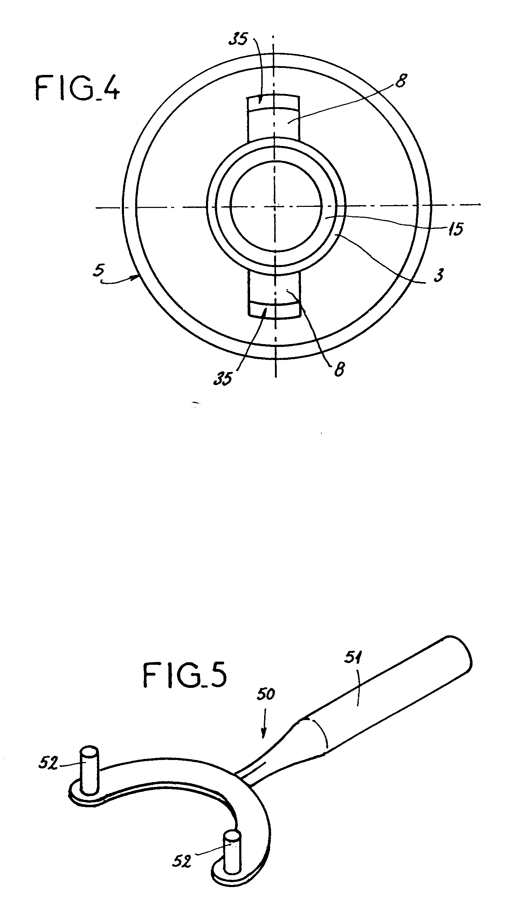

Les figures 1 à 3 montrent qu'en outre, l'extrémité de la bague 8 est en retrait de l'extrémité de la douille 5 par où le tube est introduit. Comme le montre la figure 4, cette extrémité de la douille 5 peut être fermée si ce n'est deux lumières 35 diamétralement disposées. Grâce 'à ces dispositions, la bague 8 ne peut être déplacée dans le sens où elle permet l'effacement des griffes 23a, comme cela apparaît par comparaison des figures 2 et 3, qu'au moyen de l'outil 50 représenté par la figure 5, qui, outre son manche 51, comprend deux doigts 52 prévus pour être engagés dans les lumières 35 et appuyer sur la bague 8.

**Revendications**

1 - Raccord à griffes perfectionné pour tubes souples ou tubes rigides éventuellement munis d'une gorge annulaire, du type dont le corps présente un alésage traversant et, à l'une de ses extrémités, des moyens de connexion à l'un des deux organes à relier à l'aide desdits tubes tandis qu'à son autre extrémité il présente une chambre annulaire coaxiale à l'alésage destinée à recevoir l'une des extrémités d'un tube par simple engagement, la chambre logeant différents organes annulaires pour la retenue du tube, coaxiaux à elle-même et disposés entre sa paroi et le tube, à savoir, une bague de retenue fermant partiellement la chambre et pouvant coulisser en elle, un joint d'étanchéité et une pièce présentant des griffes radiales, caractérisé en ce qu'il est constitué, d'une part, par un corps (4) présentant ledit alésage traversant (10) et lesdits moyens de connexion (11,12) et, d'autre part, par une douille (5) pouvant être assemblée au corps (4), délimitant ladite chambre (20) et comprenant des moyens (30 à 33) pour retenir les différents organes (21,22,23) précités qu'elle loge.

2 - Raccord selon la revendication 1, caractérisé en ce que les moyens pour retenir les organes (21,22,23) logés dans la chambre (20) sont constitués, du côté de la bague (21), par un épaulement (30) et, du côté de la pièce (23) à griffes (23a), par des têtons (33) faisant saillie de la face de la douille (5) délimitant la chambre (20), radialement et vers l'intérieur, au-delà desquels peut être engagée ladite pièce (23) à griffes (23a) grâce à son élasticité relative.

3 - Raccord selon la revendication 1 ou la revendication 2, caractérisé en ce que la bague (21) présente, du côté de la pièce (23) à griffes (23a) et faisant une seule pièce avec elle, un prolongement tubulaire qui lui est coaxial, dont la paroi a une épaisseur nettement inférieure à celle de sa paroi et qui fait saillie de sa face annulaire d'extrémité, ce prolongement étant divisé en deux parties, dont une première (25b), située du côté de la bague (21), qui est raccordée à la bague (21) sensiblement à équidistance des bords délimitant ladite face annulaire d'extrémité et qui comprend des lumières ménagées sur sa périphérie, et dont une deuxième (25c), située du côté des griffes (23a) de ladite pièce (23) à griffes (23a), qui a un diamètre interne non inférieur au diamètre externe du tube (3) et qui est apte, lorsqu'elle est déplacée en direction des griffes (23a), à venir appuyer contre ces dernières de manière à provoquer leur basculement dans le sens de leur effacement par rapport à la paroi du tube (3), un joint d'étanchéité (22) étant surmoulé autour de ladite première partie (25b) du prolongement.

4 - Raccord selon la revendication 2 ou la revendication 3, caractérisé en ce que le corps (4) présente un alésage (14) duquel fait saillie, coaxialement à lui-même, un embout tubulaire (15) sur lequel est destiné à être emmanché le tube (3), la face d'assemblage du corps (4) à la douille (5) comprenant, concentriquement à l'embout (15), une cuvette tronconique (16) usinée dans la paroi du corps (4) délimitant l'ouverture de l'alésage (14), un chanfrein tronconique (17) ménagé dans le bord de la paroi du corps (4) qui délimite l'ouverture de la cuvette (16), et un épaulement (18).

5 - Raccord selon l'une des revendications 1 à 4, caractérisé en ce que, du côté opposé à la pièce (23) à griffes (23a), l'extrémité de la bague (21) est en retrait de l'extrémité de la douille (5).

6 - Raccord selon la revendication 5, caractérisé en ce que l'extrémité de la douille (5) est fermée et ne comporte que des ouvertures réduites (35) empêchant l'accès à la bague (21) autrement qu'avec un outil approprié (50) prévu à cet effet.

FIG.1

FIG.2

FIG.3

FIG_4

35

8

15

5

3

35

8

FIG_5

51

50

52

52

Office européen
des brevets

**RAPPORT DE RECHERCHE EUROPEENNE**

Numero de la demande

EP    92 42 0083

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-U-8 121 384 (IMI ENOTS)<br>* figure 4 *<br>--- | 1,2 | F16L37/08 |
| A | FR-A-2 319 833 (LEGRIS FRANCE S.A.)<br>* page 5, ligne 4 - ligne 5; figure 4 *<br>--- | 1,2 | |
| A | EP-A-0 226 553 (VULCANO DI POZZI)<br>* figure 5 *<br>--- | 1 | |
| A | US-A-4 807 911 (SHORT)<br>* colonne 3, ligne 56 - ligne 60; figures 5,6 *<br>--- | 1 | |
| A | FR-A-2 573 844 (FORGES DE BELLES ONDES)<br>* figure 1 *<br>--- | 1 | |
| A | US-A-4 123 090 (KOTSAKIS ET AL)<br>* figure 4 *<br>--- | 3 | |
| A | GB-B-2 072 780 (ARMATURENFABRIK HERMANN VOSS)<br>* figure 1 *<br>--- | 4 | DOMAINES TECHNIQUES RECHERCHES (Int. Cl.5) |
| D,A | FR-A-2 584 473 (PARKER HANNIFIN)<br>* figure 1 *<br><br>----- | 4 | F16L |

Le présent rapport a été établi pour toutes les revendications

| Lieu de la recherche | Date d'achèvement de la recherche | Examinateur |
|---|---|---|
| BERLIN | 06 JUILLET 1992 | SCHLABBACH |

**CATEGORIE DES DOCUMENTS CITES**

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
 
& : membre de la même famille, document correspondant

EPO FORM 1503 03.82 (P0402)